# EUROPEAN PATENT SPECIFICATION

(11) **EP 3 830 349 B1**
(45) Date of publication and mention of the grant of the patent: **14.06.2023**
(21) Application number: 19765413.0
(22) Date of filing: 30.07.2019
(51) Int. Cl.: E03C 1/284, E03C 1/29, E03C 1/28

(54) **DRAIN SYSTEM**
ABFLUSSSYSTEM
SYSTÈME D'ÉVACUATION

(30) Priority: 31.07.2018 SE 1850946
(43) Date of publication of application: 09.06.2021
(73) Proprietor: OY Prevex AB, 66900 Nykarleby (FI)
(72) Inventor: STRANDVALL, Sören, 66900 Nykarleby (FI)
(74) Representative: Bergenstråhle & Partners AB
(86) International application number: PCT/EP2019/070466
(87) International publication number: WO 2020/025602

(56) References cited:
- EP-A2- 1 447 486
- EP-B1- 0 749 547
- DE-A1- 2 630 964
- GB-A- 594 482
- GB-A- 1 220 249
- US-A- 3 654 965

## Description

### Technical field

The present invention relates to a part for a drain system, such as a water trap, adapted for connection to differently sized drain pipes.

### Background art

Conventional residential kitchen sinks typically include a faucet, water basin, and a drain of the basin. Plumbing for directing sink wastewater to a septic system of some sort, or to a sewer, is confined in a small cabinet-like area underneath the sink. Additionally, the plumbing beneath the residential sink can include connections to a dishwasher for carrying dishwasher wastewater into the plumbing and to the sewer or septic system.

The plumbing necessary for removing the wastewater from the basins generally consists of interconnected pipes leading to a common waste pipe. In one prior art proposal, interconnected pipes are telescoped together and connected to each other by means of a press fit assembly.

Currently, there are several standard sizes for the pipes of the plumbing, such as a diameter of 40 and 50 millimeters. This poses a problem, since when installing a new assembly, you need different parts for the different standards. For example, when the existing waste pipe has a diameter of 40 millimeters, you need a water trap with a connection corresponding to this standard, and when the existing waste pipe has a diameter of 50 millimeters, you need a water trap with a connection corresponding to that standard.

Patent publication DE 26 30 964 A1 discloses a part for a drain system, wherein an element is provided in a first pipe and having an eccentric opening to receive another pipe with smaller diameter than the first pipe.

### Summary of invention

An object of the present invention is to mitigate the problems of prior art systems and to provide a part for a water trap system to which drain pipes of different diameters can be connected.

The invention is based on the insight that the two interconnected pipes can be mutually eccentric.

According to a first aspect of the invention, there is provided a part for a drain system, comprising a first end pipe and a second end pipe in fluid connection with the first end pipe, the second end pipe having a wall with a centre axis, a uniform thickness and an inner surface; which comprises a spacing means arranged on the inner surface of the wall of the second end pipe which is eccentrically provided in relation to the centre axis of the wall, whereby a connection pipe when being inserted into the second end pipe will be eccentric in relation to the second end pipe.

The spacing means comprises a plurality of longitudinal ribs provided on the inner surface of the wall.

In a preferred embodiment, the part is a water trap.

In a preferred embodiment, the wall of the second end pipe has circular cross-sectional shape.

In a preferred embodiment, after mounting of the part for normal operation, the spacing means has a larger thickness at the upper portion of the second end pipe than at the lower portion thereof.

In a preferred embodiment, the spacing means is adapted to provide zero spacing at the lower portion of the second end pipe.

In a preferred embodiment, the first end pipe is an inlet pipe and the second end pipe is an outlet pipe for fluid.

In a preferred embodiment, the part comprises an eccentrically provided gasket in a groove in the inner surface of the wall.

According to a second aspect of the invention, a drain system is provided comprising a part according to the invention, wherein the first end pipe is connected to a sink plug and the second end pipe is connected to a waste pipe.

### Brief description of drawings

The invention is now described, by way of example, with reference to the accompanying drawings, in which:
Fig. 1 is an overview of a drain system in the form of a water trap system;
Fig. 2a is a perspective view of a water trap comprised in the system shown in Fig. 1;
Fig. 2b is a cross-sectional view of the water trap of Fig. 2a;
Fig. 3a is a perspective view of the water trap of Fig. 2a with a drain pipe of smaller diameter attached thereto;
Fig. 3b is a sectional view of the arrangement of Fig. 3a;
Fig. 4a is a perspective view of the water trap of Fig. 2a with a drain pipe of larger diameter attached thereto; and
Fig. 4b is a sectional view of the arrangement of Fig. 4a.

### Description of embodiments

In the following, a detailed description of a part for a drain system will be given. The term "drain system" should be construed to include drain systems in kitchens and bathrooms or the like, including water traps and other parts included therein, such as mechanical odor blocking devices, so called dry siphons, or interconnecting tubes.

It will be realized that when reference is made to different directions, such as "upper" and "lower", this reference is made when the part has been installed for normal operation.

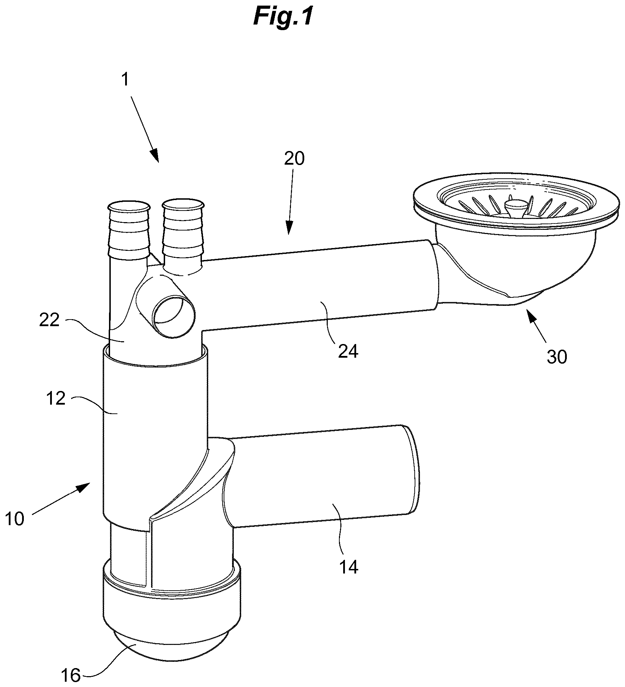

Turning first to Fig. 1, a drain system in the form of a water trap system is shown, generally designated 1, which comprises a water trap in the form of a so-called bottle trap 10. The water trap 10 comprises a first end pipe in the form of a vertical inlet portion 12 and a second end pipe in the form of a horizontal outlet portion 14. The first and second end pipes 12, 14 have circular cross-sectional shape. A cup 16 is detachably attached to the lower end of the water trap 10. A bend 20 having a first, vertical portion 22 and a second, horizontal portion 24 is telescopically connected at its vertical portion 22 to the vertical inlet portion of the water trap 10. A waste arm 30 is telescopically connected to the horizontal portion 24 of the bend 20. The waste arm comprises a sink outlet 32 adapted to be attached to a sink basin (not shown), as is conventional. This provides a flexible water trap system adaptable to different dimensions and layouts of the sink basin.

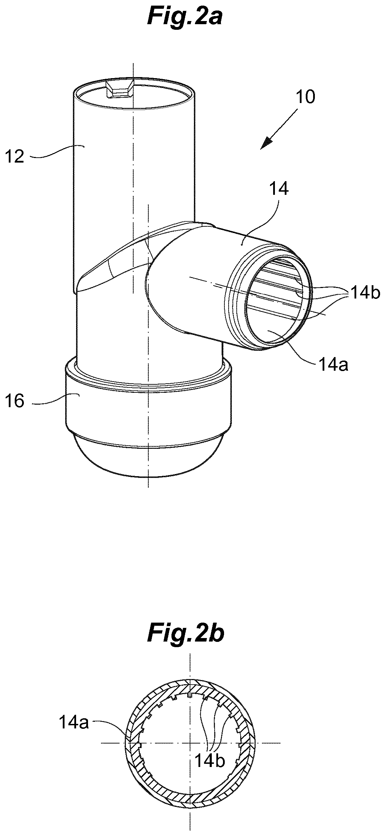

Fig. 2a shows a perspective view of the water trap 10. From this figure it is seen that the horizontal outlet portion 14 comprises a tubular pipe 14a with an outer surface and an inner surface. A spacing means in the form of a plurality of longitudinal ribs 14b is provided on the inner surface of the outlet portion wall. From the sectional view shown in Fig. 2b it is evident that the tubular pipe 14a has a uniform thickness and that the spacing means is eccentrically provided on the inner surface. This means that the ribs provided in the upper portion of the tubular pipe 14a have a greater thickness, i.e., they extend a longer distance towards the centre axis of the tubular pipe 14 than the lower ribs. In the embodiment shown in Fig. 2b, the thickness of the lowermost ribs is zero, i.e., there is no rib at the lowest portion of the tubular pipe 14a. In other words, the spacing means is adapted to provide zero spacing at the lower portion of the tubular pipe 14.

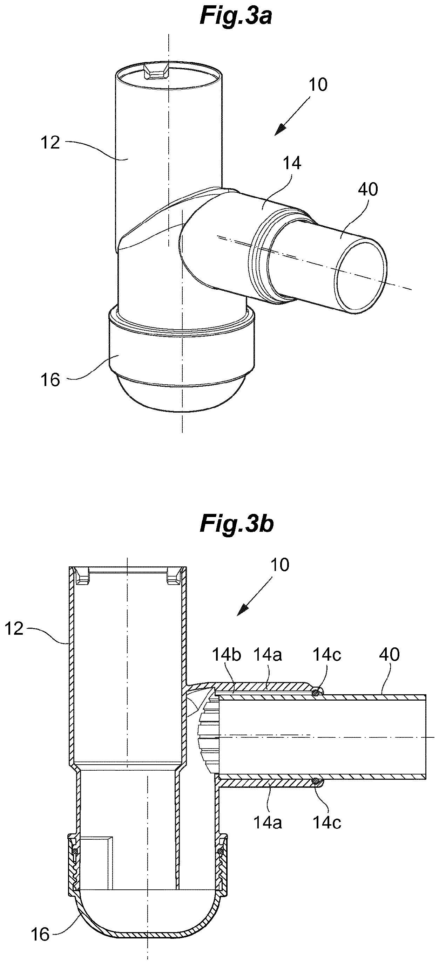

The function of this eccentricity will now be explained with reference to Figs. 3a and 3b, showing the water trap with a connection pipe in the form of a drain pipe 40 attached to the horizontal outlet portion 14 thereof. The outer diameter of the drain pipe 40 corresponds to the inner diameter of the spacing means 14b, i.e., the distance between the uppermost and lowermost ribs and between the centre ribs provided on opposite sides of the inner wall of the tubular pipe 14a. In a preferred embodiment, the diameter of the drain pipe is 40 millimeters, which is a standard size for drain pipes. A likewise eccentrically provided gasket 14c provided in a groove in the inner wall of the tubular pipe 14a seals against the outer surface of the drain pipe 40.

By providing the eccentrically provided spacing means 14b on the inside of the tubular pipe 14a, this pipe can be made with uniform but still small thickness, which from a manufacturing point of view is an advantage, since it is difficult to manufacture a tube with a large or non-uniform thickness. Also, the amount of material is kept down with this solution.

It is preferred to provide the spacing means with a low centre axis, i.e., with the thickest ribs 14b at the top, since this minimizes the risk of leakage with contact between the inner surface of the tubular pipe 14a and the outer surface of the drain pipe 40 at the lower portion, where drain water always flows.

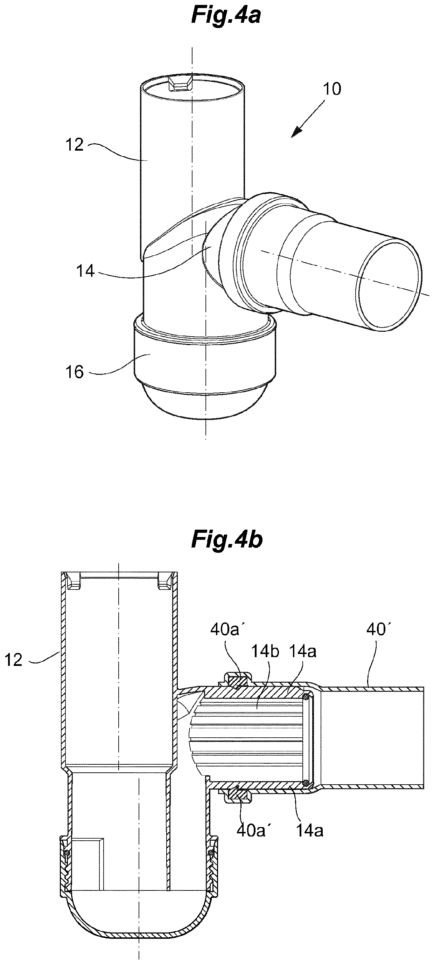

In Figs. 4a and 4b the alternative of attaching a drain pipe of larger diameter to the horizontal outlet portion 14 is shown. This larger drain pipe may be of the so-called 50 millimeters standard. In this case, the inner diameter of the connection portion of the drain pipe 40' corresponds to the outer diameter of the tubular pipe 14a. A gasket 40a' is provided in a groove at the inner surface of the outer end portion of the drain pipe 40', providing a tight fit between the water trap 10 and the drain pipe 40'.

A preferred embodiment of a water trap system has been described. It will be realized that this may be varied within the scope of the appended claims without departing from the inventive idea. Thus, the eccentricity of the spacing means may be different, with greater risk of leakage at the lower end thereof. Also, the principle of an eccentric spacing means can be applied to other parts of a drain system, such as between two, preferably horizontally oriented telescoping pipes in the drain system.

The water trap has been shown with inlet and outlet pipes with circular cross-sectional shape. It will be realized that also other shapes, such as elliptic, are possible.

## Claims

1. A part for a drain system, comprising:
a first end pipe (12); and
a second end pipe (14) in fluid connection with the first end pipe (12), the second end pipe (14) having a wall (14a) with a centre axis, a uniform thickness and an inner surface; and
a spacing means (14b) comprising a plurality of longitudinal ribs provided on the inner surface of the wall (14a) of the second end pipe (14), wherein the longitudinal ribs are eccentrically provided in relation to the centre axis of the wall (14a), whereby a connection pipe (40), when inserted in the second end pipe (14), is eccentric in relation to the second end pipe (14).

2. The part for a drain system according to claim 1, wherein the part is a water trap.

3. The part for a drain system according to any one of claims 1-2, wherein the wall (14a) of the second end pipe (14) has a circular cross-sectional shape.

4. The part for a drain system according to any one of claims 1-3, wherein, after mounting of the part for normal operation, the spacing means (14b) has a larger thickness at an upper portion of the second end pipe (14) than at a lower portion thereof.

5. The part for a drain system according to any one of claims 1-4, wherein the spacing means is adapted to provide zero spacing at a lower portion of the second end pipe (14).

6. The part for a drain system according to any one of claims 1-5, wherein the first end pipe (12) is an inlet pipe and the second end pipe (14) is an outlet pipe for fluid.

7. The part for a drain system according to any one of claims 1-6, comprising an eccentrically provided gasket in a groove in the inner surface of the wall (14a).

8. A water drain comprising a part according to any one of claims 1-7, wherein the first end pipe (12) is connected to a sink plug (30) and the second end pipe (14) is connected to a waste pipe (40).

## Patentansprüche

1. Teil für ein Abflusssystem, umfassend:
ein erstes Endrohr (12); und
ein zweites Endrohr (14) in Fluidverbindung mit dem ersten Endrohr (12), wobei das zweite Endrohr (14) eine Wand (14a) mit einer Mittelachse, einer gleichmäßigen Dicke und einer Innenfläche aufweist;
und
ein Abstandsmittel (14b), das eine Vielzahl von Längsrippen umfasst, die auf der Innenfläche der Wand (14a) des zweiten Endrohrs (14) bereitgestellt sind, wobei die Längsrippen exzentrisch in Bezug auf die Mittelachse der Wand (14a) bereitgestellt sind, wodurch ein Verbindungsrohr (40), wenn es in das zweite Endrohr (14) eingeführt ist, exzentrisch in Bezug auf das zweite Endrohr (14) ist.

2. Teil für ein Abflusssystem nach Anspruch 1, wobei der Teil eine Wasserfalle ist.

3. Teil für ein Abflusssystem nach einem der Ansprüche 1-2, wobei die Wand (14a) des zweiten Endrohrs (14) einen kreisförmigen Querschnitt aufweist.

4. Teil für ein Abflusssystem nach einem der Ansprüche 1-3, wobei nach Montieren des Teils für den Normalbetrieb das Abstandsmittel (14b) an einem oberen Abschnitt des zweiten Endrohrs (14) eine größere Dicke aufweist als an einem unteren Abschnitt davon.

5. Teil für ein Abflusssystem nach einem der Ansprüche 1-4, wobei das Abstandsmittel so angepasst ist, dass es an einem unteren Abschnitt des zweiten Endrohrs (14) einen Null-Abstand bereitstellt.

6. Teil für ein Abflusssystem nach einem der Ansprüche 1-5, wobei das erste Endrohr (12) ein Einlassrohr und das zweite Endrohr (14) ein Auslassrohr für Fluid ist.

7. Teil für ein Abflusssystem nach einem der Ansprüche 1-6, umfassend eine exzentrisch bereitgestellte Dichtung in einer Rille in der Innenfläche der Wand (14a).

8. Wasserabfluss, umfassend einen Teil nach einem der Ansprüche 1-7, wobei das erste Endrohr (12) mit einem Spülbeckenstöpsel (30) verbunden ist und das zweite Endrohr (14) mit einem Abwasserrohr (40) verbunden ist.

## Revendications

1. Pièce pour un système d'évacuation, comprenant :
un premier tuyau d'extrémité (12) ; et
un second tuyau d'extrémité (14) en communication fluidique avec le premier tuyau d'extrémité (12), le second tuyau d'extrémité (14) présentant une paroi (14a) avec un axe central, une épaisseur uniforme et une surface interne ;
et
un moyen d'espacement (14b) comprenant une pluralité de nervures longitudinales prévues sur la surface interne de la paroi (14a) du second tuyau d'extrémité (14), dans laquelle les nervures longitudinales sont prévues de manière excentrée par rapport à l'axe central de la paroi (14a), selon lequel un tuyau de raccordement (40), lorsqu'il est inséré dans le second tuyau d'extrémité (14), est excentré par rapport au second tuyau d'extrémité (14).

2. Pièce pour un système d'évacuation selon la revendication 1, dans laquelle la pièce est un siphon d'eau.

3. Pièce pour un système d'évacuation selon l'une quelconque des revendications 1-2, dans laquelle la paroi (14a) du second tuyau d'extrémité (14) présente une forme en coupe transversale circulaire.

4. Pièce pour un système d'évacuation selon l'une quelconque des revendications 1-3, dans laquelle, après montage de la pièce pour un fonctionnement normal, le moyen d'espacement (14b) présente une épaisseur plus importante au niveau d'une partie supérieure du second tuyau d'extrémité (14) qu'au niveau d'une partie inférieure de celui-ci.

5. Pièce pour un système d'évacuation selon l'une quelconque des revendications 1-4, dans laquelle le moyen d'espacement est adapté pour prévoir un espacement nul au niveau d'une partie inférieure du second tuyau d'extrémité (14).

6. Pièce pour un système d'évacuation selon l'une quelconque des revendications 1-5, dans laquelle le premier tuyau d'extrémité (12) est un tuyau d'entrée et le second tuyau d'extrémité (14) est un tuyau de sortie de fluide.

7. Pièce pour un système d'évacuation selon l'une quelconque des revendications 1-6, comprenant un joint d'étanchéité prévu de manière excentrée dans une rainure dans la surface interne de la paroi (14a).

8. Évacuation d'eau comprenant une pièce selon l'une quelconque des revendications 1-7, dans laquelle le premier tuyau d'extrémité (12) est raccordé à un bouchon d'évier (30) et le second tuyau d'extrémité (14) est raccordé à un tuyau d'évacuation d'eaux usées (40).
